# DEMANDE DE BREVET EUROPEEN

(11) **EP 2 143 655 A1**
(43) Date de publication de la demande: **13.01.2010**
(21) Numéro de dépôt: 09164064.9
(22) Date de dépôt: 29.06.2009
(51) Int. Cl.: B65D 35/06, B21C 23/20, B29C 43/36

(54) **Matrice pour une presse de filage**

(30) Priorité: 30.06.2008 FR 0854375
(71) Demandeur: Alltub, 92500 Rueil Malmaison (FR)
(72) Inventeur: Berger, Frédéric, 92500 Rueil Malmaison (FR)
(74) Mandataire: Maillet, Alain

(57) **Abrégé**

L'invention concerne une matrice (410) pour une presse de filage d'un tube souple comprenant une jupe et une tige, la matrice (410) comprenant :
- un corps (702),
- un alésage (704) réalisé dans ledit corps (702) et présentant une première partie (706) prévue pour constituer l'empreinte de la jupe, une deuxième partie prévue pour constituer l'empreinte de la tige et une troisième partie (708) prévue pour constituer l'empreinte de moyens de blocage à la jonction de la tige et de la jupe sous forme d'un collet muni d'ergots.

## Description

La présente invention concerne une matrice pour réaliser un tube souple, ainsi qu'un tube souple réalisé à l'aide d'une telle matrice.

L'industrie et, en particulier l'industrie cosmétique, utilise souvent des tubes en matière souple comme de l'aluminium. Chaque tube est destiné à contenir un produit.

Un tube de l'état de la technique comprend une jupe et une tige. La jupe forme le contenant dans lequel est stocké ledit produit et la tige forme l'embout qui est bouché par un opercule, qui lui-même sera percé pour permettre l'écoulement du produit. L'embout est également fileté pour permettre le vissage d'un applicateur ou d'un bouchon.

Pour maintenir le tube hermétiquement fermé avant la première utilisation, un opercule généralement en aluminium obture le perçage de la tige. A la première utilisation, cet opercule est percé pour permettre l'écoulement du produit. Pour faciliter le perçage de l'opercule, un perforateur qui prend généralement la forme d'un ergot pointu est réalisé sous l'applicateur et le perçage s'effectue par pression de l'applicateur sur la tige au-delà d'une certaine limite.

Après le vissage de l'applicateur, rien n'empêche ce dernier de se dévisser, ce qui peut entraîner un écoulement non désiré du produit.

Un objet de la présente invention est de proposer une matrice qui permet de réaliser un tube souple qui ne présente pas les inconvénients de l'art antérieur et qui en particulier empêche le dévissage de l'applicateur après perforation de l'opercule.

A cet effet, est proposée une matrice pour une presse de filage d'un tube souple comprenant une jupe et une tige, la matrice comprenant :
- un corps,
- un alésage réalisé dans ledit corps et présentant une première partie prévue pour constituer l'empreinte de la jupe, une deuxième partie prévue pour constituer l'empreinte de la tige et une troisième partie prévue pour constituer l'empreinte de moyens de blocage à la jonction de la tige et de la jupe sous forme d'un collet muni d'ergots.

Avantageusement, la troisième partie comprend, pour chaque ergot, une première surface destinée à réaliser une surface de glissement dudit ergot et une deuxième surface destinée à réaliser une surface de blocage dudit ergot.

Avantageusement, chaque surface est sensiblement parallèle à l'axe de l'alésage.

Avantageusement, la première surface destinée à réaliser la surface de glissement d'un ergot et la deuxième surface destinée à réaliser la surface de blocage d'un ergot voisin, sont continues et présentent entre elles un angle sensiblement droit.

Avantageusement, la deuxième surface destinée à réaliser la surface de blocage d'un ergot et la première surface destinée à réaliser la surface de glissement du même ergot présentent entre elles un angle aigu.

Avantageusement, l'alésage est débouchant.

L'invention propose également un tube souple, comprenant une jupe et une tige, réalisé par filage sur une matrice selon l'une des variantes précédentes et comprenant des moyens de blocage à la jonction de la tige et de la jupe sous forme d'un collet muni d'ergots.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une coupe d'un tube assemblé selon l'invention avant la perforation de l'opercule,
la Fig. 2 est une coupe du tube assemblé de la Fig. 1 après perforation de l'opercule,
la Fig. 3 est une vue en perspective d'un tube souple selon l'invention,
les Figs. 4, 5 et 6 sont des vues schématiques de certaines étapes du procédé de fabrication du tube souple selon l'invention,
la Fig. 7 est une coupe d'une matrice selon l'invention, et
la Fig. 8 est une vue de dessus d'un collet de la matrice de la Fig. 7.

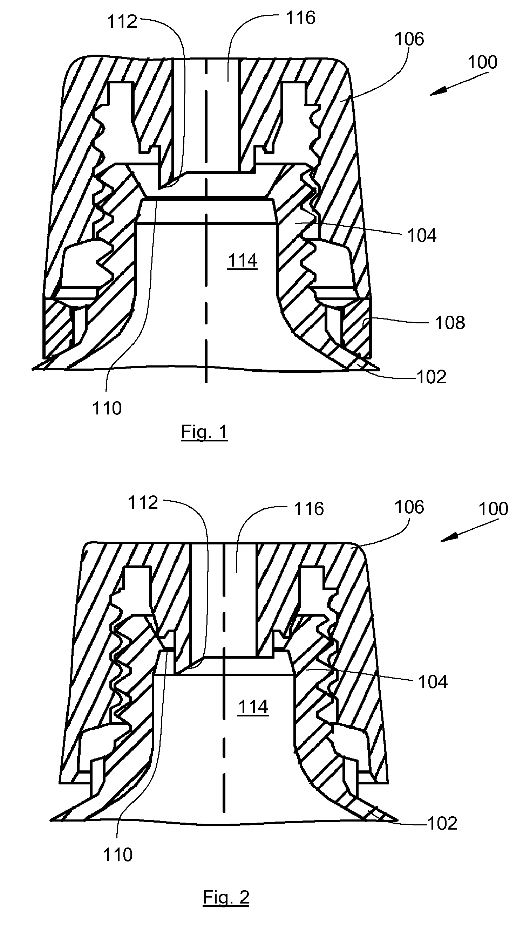

La Fig. 1 montre un tube assemblé 100 qui comprend un tube souple lui-même constitué d'une jupe 102 et d'une tige 104, un applicateur 106, une bague de préservation 108 et un opercule 110. La jupe 102 et la tige 104 sont généralement réalisées en aluminium. L'applicateur 106 et la bague de préservation 108 sont généralement réalisés en matière plastique.

La jupe 102 sert de réservoir à un produit. L'applicateur 106 est percé d'un canal 116. Un bouchon venant coiffer l'applicateur 106 est également généralement prévu.

La bague de préservation 108 est enfilée sur la tige 104 et est prise en sandwich entre la jupe 102 et l'applicateur 106. La tige 104 et l'intérieur de l'applicateur 106 sont filetés et les deux filetages coopèrent ensemble afin de maintenir l'applicateur 106 sur la tige 104 et par conséquent la bague de préservation 108.

La tige 104 est percée d'un canal 114 qui communique avec l'intérieur de la jupe 102, et qui permet l'écoulement du produit vers l'extérieur au travers du canal 116 de l'applicateur 106.

Afin de protéger le produit avant la première utilisation, l'opercule 110 est fixé sur la tige 104 de manière à obturer le canal 114. A l'intérieur de l'applicateur 106 est réalisé un perforateur 112 sous forme d'un ergot pointu.

La Fig. 1 montre le tube assemblé 100 lorsque la bague de préservation 108 est en place entre la jupe 102 et l'applicateur 106. L'épaisseur de la bague de préservation 108 est telle que dans cet assemblage, le perforateur 112 n'atteint pas l'opercule 110.

La Fig. 2 montre le tube assemblé 100 lorsque la bague de préservation est retirée. L'applicateur 106 peut alors être vissé sur la tige 1040 de manière à ce que le perforateur 112 vienne perforer l'opercule 110, libérant ainsi le canal 114 et permettant l'écoulement du produit au travers du canal 116 de l'applicateur 106.

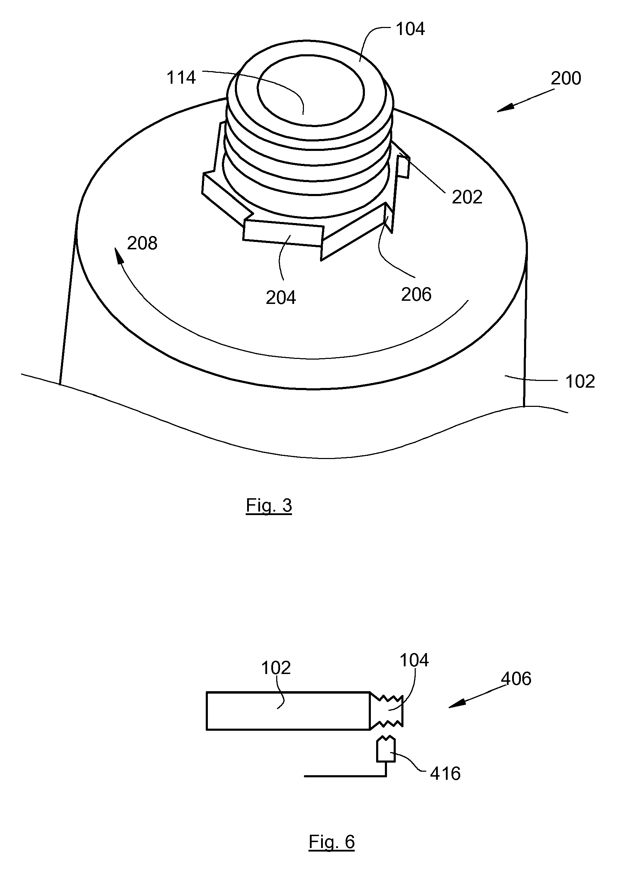

La Fig. 3 montre le tube souple, c'est-à-dire la jupe 102 et la tige 104 en perspective. La tige 104 présente au niveau de sa base des moyens de blocage 200 qui se présentent sous la forme d'un collet muni d'ergots 202. Le collet est ainsi disposé au sommet de la jupe 102 au niveau de la jonction entre la jupe 102 et la tige 104.

La flèche 208 représente le sens de vissage de l'applicateur 106 sur la tige 104. L'applicateur 106 comprend au niveau de sa base, c'est-à-dire au-dessous de son filetage, des ergots qui sont destinés à coopérer avec les ergots 202 de la tige 104.

Les ergots 202 de la tige 104 sont répartis angulairement autour de la tige 104, dans le mode de réalisation représenté ici, il y a huit ergots 202 régulièrement répartis tous les 22,5° sur la périphérie de la tige 104.

Chaque ergot 202 comprend une surface de glissement 204 et une surface de blocage 206, chaque surface étant sensiblement parallèle à l'axe de la tige 104. Dans le sens de rotation 208, c'est-à-dire le sens de vissage de l'applicateur 106, chaque surface de blocage 206 d'un ergot 202 est continue avec la surface de glissement 204 de l'ergot 202 suivant. La surface de glissement 204 et la surface de blocage 206 d'un même ergot 202 présentent entre elles un angle aigu. La surface de blocage 206 d'un ergot et la surface de glissement 204 de l'ergot 202 suivant présentent entre elles un angle sensiblement droit.

Les ergots de l'applicateur 106 présentent des formes complémentaires aux ergots 202 de la tige 104. Les ergots de l'applicateur 106 sont disposés sur le pourtour du collet et comportent de préférence des surfaces de glissement et des surfaces de blocage qui coopèrent respectivement avec les surfaces de glissement 204 et les surface de blocage 206 de la tige 104.

Les surfaces de glissement de l'applicateur 106 et de la tige 104 sont sensiblement orthoradiales par rapport au cylindre constituant la tige 104.

Les surfaces de blocage de l'applicateur 106 et de la tige 104 sont sensiblement radiales par rapport au cylindre constituant la tige 104.

Lorsque l'applicateur 106 est vissé sur la tige 104, les surfaces de glissement de l'applicateur 106 viennent glisser sur les surfaces de glissement de la tige 104 de manière à ce que les ergots de l'applicateur 106 viennent se bloquer dans les ergots 202 de la tige 104, permettant l'encliquetage des ergots de l'applicateur 106 dans les ergots de la tige 104.

Le dévissage de l'applicateur 106 est ensuite impossible car les surfaces de blocage des ergots de l'applicateur 106 et les surfaces de blocage 206 de la tige 104 viennent en appui les unes contre les autres.

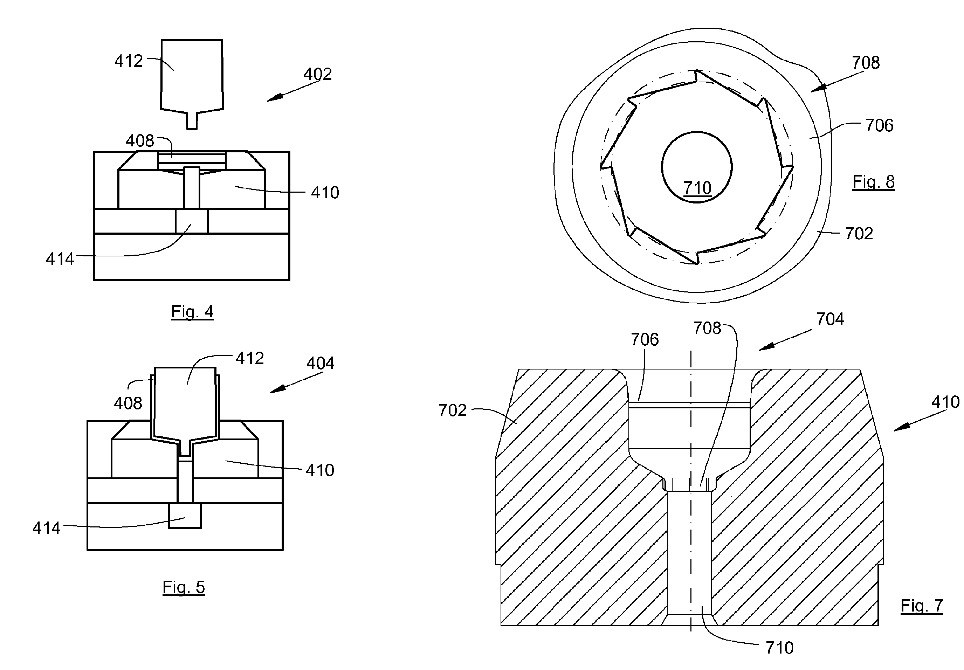

Les Figs. 4, 5 et 6 montrent des vues schématiques de certaines étapes d'un procédé de fabrication du tube souple. En particulier, la Fig. 4 montre une étape de préparation 402, la Fig. 5 montre une étape de filage 404, et la Fig. 6 montre une étape d'usinage 406.

Au cours de l'étape de préparation 402, un pion 408, de préférence en aluminium, est disposé dans une matrice 410 en vis-à-vis d'un poinçon 412 dont le profil est identique au profil de la jupe 102 et de la tige 104 devant être obtenues.

Au cours de l'étape de filage 404, le poinçon 412 vient enfoncer le pion 408 qui vient se conformer entre la matrice 410 et le poinçon 412. En même temps, un poussoir 414 se retire de la matrice 410 de manière à libérer un volume où se forme la tige 104. L'étape de filage peut être réalisée par exemple par une presse horizontale dont la puissance peut varier de 40 à 500 tonnes. Les tubes souples sont généralement filés à froid par choc en une seule fois.

Au cours de l'étape d'usinage 406, la jupe 102 et la tige 104 subissent des premiers traitements mécaniques. Par exemple, la tige 104 subit un traitement en vue de réaliser son filetage. A cette fin, un outil de filetage 416 vient usiner le filetage sur la tige 104.

D'autres étapes peuvent ensuite être réalisées. On cite par exemple:
- une étape de recuit au cours de laquelle la jupe 102 et la tige 104 subissent un traitement thermique,
- une étape de vernissage de l'intérieur de la jupe 102,
- une étape de laquage de l'extérieur de la jupe 102,
- une étape de séchage de la jupe 102,
- une étape d'impression et de séchage de la jupe 102 au cours de laquelle des motifs sont imprimés sur l'extérieur de la jupe 102,
- une étape de mise en place, pour chaque tube souple, de la bague de préservation 108, de l'applicateur 106 et du bouchon,
- une étape d'emballage des tubes assemblés.

La Fig. 7 montre un exemple d'une matrice 410 prévue pour permettre de réaliser la jupe 102 et la tige 104 non filetée comprenant les moyens de blocage 200.

La matrice 410 comprend un corps 702 dans lequel est réalisé un alésage 704 dont l'axe est l'axe de la tige 104 et qui présente une première partie 706 prévue pour constituer l'empreinte de la jupe 102, une deuxième partie 710 prévue pour constituer l'empreinte de la partie de la tige 104 devant être filetée ainsi que la zone de retrait du poussoir 414 et une troisième partie 708 prévue pour constituer l'empreinte des moyens de blocage 200.

La Fig. 8 montre la troisième partie 708 en vue de dessus selon la Fig. 7. La deuxième zone 708 prend la forme d'une empreinte dans laquelle le collet et les ergots 202 viennent se conformer.

La troisième partie 708 comprend, pour chaque ergot 202, une première surface destinée à réaliser la surface de glissement 204 de l'ergot 202 considéré et une deuxième surface destinée à réaliser la surface de blocage 206 du même ergot 202. Chaque première surface et chaque deuxième surface sont sensiblement parallèles à l'axe de l'alésage.

La première surface destinée à réaliser la surface de glissement 204 d'un ergot 202 et la deuxième surface destinée à réaliser la surface de blocage 206 d'un ergot 202 voisin, sont continues et présentent entre elles un angle sensiblement droit.

La deuxième surface destinée à réaliser la surface de blocage 206 d'un ergot 202 et la première surface destinée à réaliser la surface de glissement 204 du même ergot 202 présentent entre elles un angle aigu.

L'alésage est débouchant pour permettre le passage du poussoir 414.

Bien entendu, la présente invention n'est pas limitée aux exemples et modes de réalisation décrits et représentés, mais elle est susceptible de nombreuses variantes accessibles à l'homme de l'art.

## Revendications

1. Matrice (410) pour une presse de filage d'un tube souple comprenant une jupe (102) et une tige (104), la matrice (410) comprenant :
- un corps (702),
- un alésage (704) réalisé dans ledit corps (702) et présentant une première partie (706) prévue pour constituer l'empreinte de la jupe (102), une deuxième partie (710) prévue pour constituer l'empreinte de la tige (104) et une troisième partie (708) prévue pour constituer l'empreinte de moyens de blocage (200) à la jonction de la tige (104) et de la jupe (102) sous forme d'un collet muni d'ergots (202).

2. Matrice (410) selon la revendication 1, **caractérisée en ce que** la troisième partie (708) comprend, pour chaque ergot (202), une première surface destinée à réaliser une surface de glissement (204) dudit ergot (202) et une deuxième surface destinée à réaliser une surface de blocage (206) dudit ergot (202).

3. Matrice (410) selon la revendication 2, **caractérisée en ce que** chaque surface est sensiblement parallèle à l'axe de l'alésage.

4. Matrice (410) selon la revendication 3, **caractérisée en ce que** la première surface destinée à réaliser la surface de glissement (204) d'un ergot (202) et la deuxième surface destinée à réaliser la surface de blocage (206) d'un ergot (202) voisin, sont continues et présentent entre elles un angle sensiblement droit.

5. Matrice (410) selon la revendication 4, **caractérisée en ce que** la deuxième surface destinée à réaliser la surface de blocage (206) d'un ergot (202) et la première surface destinée à réaliser la surface de glissement (204) du même ergot (202) présentent entre elles un angle aigu.

6. Matrice (410) selon l'une des revendications 1 à 5, **caractérisée en ce que** l'alésage (704) est débouchant.

7. Tube souple comprenant une jupe (102) et une tige (104), réalisé par filage sur une matrice selon l'une des revendications 1 à 6 et comprenant des moyens de blocage (200) à la jonction de la tige (104) et de la jupe (102) sous forme d'un collet muni d'ergots (202).
